# EUROPEAN PATENT APPLICATION

(11) **EP 4 310 999 A1**
(43) Date of publication of application: **24.01.2024**
(21) Application number: 21932048.8
(22) Date of filing: 22.03.2021
(51) Int. Cl.: H01M 50/112

(54) **BATTERY PACK AND ELECTRICAL APPARATUS PROVIDED WITH BATTERY PACK**

(71) Applicant: Ningde Amperex Technology Ltd., Ningde, Fujian 352106 (CN)
(72) Inventor: YAN, Kun, Ningde City, Fujian Province 352100 (CN); ZHANG, Weidong, Ningde City, Fujian Province 352100 (CN); DING, Yu, Ningde City, Fujian Province 352100 (CN); LIU, Daolin, Ningde City, Fujian Province 352100 (CN)
(74) Representative: Icosa
(86) International application number: PCT/CN2021/082196
(87) International publication number: WO 2022/198416

(57) **Abstract**

A battery pack (100), including a housing (10), a circuit board (20), and a plurality of electrode assemblies (30). The housing (10) includes a first surface (11) and a second surface (12) opposite to each other. The circuit board (20) is arranged on the first surface (11). The first surface (11) is sunken toward the second surface (12) to form a plurality of first slots (110). The battery pack (100) further includes a plurality of first caps (40), and the plurality of first caps (40) respectively cover the plurality of first slots (110) to form a plurality of mutually separated accommodation spaces (111). The electrode assemblies (30) each includes an electrode plate assembly (31), a first electrode tab (32), and a second electrode tab (33). The electrode plate assembly (31) is accommodated in the accommodating space (111). The first tab (32) and the second tab (33) extend out of the accommodating space (111). At least one first electrode tab (32) and at least one second electrode tab (33) in the plurality of electrode assemblies (30) are electrically connected to the circuit board (20). The present application further provides an electrical apparatus (1) with the battery pack (100). According to the present application, the structure and the manufacturing process of the battery pack can be simplified, and the cost is reduced.

## Description

### TECHNICAL FIELD

The present application relates to the technical field of energy storage, and in particular, to a battery pack and an electrical apparatus with the same.

### BACKGROUND

With the development of the battery technology, batteries (such as a lithium-ion battery) are widely applied in electrical devices such as an electric bicycle, an electric vehicle, etc. As a power source of the electrical device, in order to obtain high capacity and high power, cells are generally assembled into a battery pack.

In the prior art, the cells are generally respectively encapsulated and then integrally encapsulated, resulting in that the battery pack has the problems of complex structure and long process flow, and the manufacturing cost of the battery pack is increased.

### SUMMARY

In view of this, it is necessary to provide a battery pack capable of simplify the manufacturing process and reduce the manufacturing cost.

In addition, it is also necessary to provide an electrical apparatus with the battery pack as above.

The present application provides a battery pack, including a housing, a circuit board, and a plurality of electrode assemblies. The housing includes a first surface and a second surface opposite to each other, and the first surface is provided with a plurality of first slots. The battery pack further includes a plurality of first caps, and the plurality of first caps respectively cover the plurality of first slots to form a plurality of mutually separated accommodation spaces. The electrode assemblies each includes an electrode plate assembly, a first electrode tab, and a second electrode tab. The electrode plate assembly is accommodated in the accommodation space, the first electrode tab and the second electrode tab extend out of the accommodation space, and at least one first electrode tab and at least one second electrode tab in the plurality of electrode assemblies are electrically connected to the circuit board.

In some possible implementation modes, the first electrode tab and the second electrode tab in the plurality of electrode assemblies are both electrically connected to the circuit board, so that monitoring on each electrode assembly can be implemented.

In some possible implementation modes, the first slot includes a main body and two connection portions. The electrode plate assembly is accommodated in the main body. The first electrode tab and the second electrode tab are respectively accommodated in the two connection portions and extend out of the accommodation space from the connection portions. Arranging the connection portions is convenient to position the first electrode tab and the second electrode tab in the first slot.

In some possible implementation modes, the first slot forms an opening in the first surface. The first cap covers the opening. A seal is arranged between the first cap and the opening. The seal is used for sealing a gap between the first cap and the opening, i.e., implementing sealing on one single accommodation space and preventing electrolyte from flowing out of the accommodation space.

In some possible implementation modes, the second surface is provided with a second slot. The second slot is not communicated with the first slot. A cooling medium is accommodated in the second slot. The cooling medium is used for cooling the electrode assemblies so as to fulfill the aim of cooling.

In some possible implementation modes, the battery pack further includes a second cap, and the second cap covers the housing. The circuit board is positioned between the second cap and the housing. The second cap can protect an internal structure of the battery pack.

In some possible implementation modes, the first electrode tab of one electrode assembly is electrically connected to the second electrode tab of another electrode assembly so as to form a series electrode assembly group.

In some possible implementation modes, the first electrode tab of one electrode assembly is electrically connected to the first electrode tab of another electrode assembly, and the second electrode tab of one electrode assembly is electrically connected to the second electrode tab of another electrode assembly so as to form a parallel electrode assembly group.

In some possible implementation modes, the first electrode tab is a negative electrode tab, and the second electrode tab is a positive electrode tab.

In some possible implementation modes, the battery pack further includes a conductive connection plate, and the conductive connection plate includes a first conductive portion and a second conductive portion connected with each other. The first conductive portion is connected to the first electrode tab and/or the second electrode tab, the second conductive portion is electrically connected to the circuit board. The conductive connection plate as a series and/or parallel port of the electrode assembly can be electrically connected with the circuit board, so that the circuit board can be used for acquiring an electric signal of the electrode assembly.

In some possible implementation modes, a length by which the first electrode tab extends out of the accommodation space is greater than that by which the second electrode tab extends out of the accommodation space, and at least one first electrode tab is connected with the circuit board by welding.

In some possible implementation modes, the circuit board is fixed to the first surface to prevent the circuit board from moving above the first surface.

The present application further provides an electrical apparatus, including the battery pack as above.

According to the present application, the housing not only is used as a shell of the entire battery pack, but also is used as a shell of the single electrode assembly, and the electrode plate assembly is arranged in the first slot formed in the housing, and thus, the present application avoids the segmented machining process of respectively encapsulating each electrode assembly and then integrally carrying out encapsulation, facilitates simplifying the structure and the manufacturing process of the battery pack, and reduces the cost. Moreover, in the present application, the accommodation spaces for accommodating different electrode assemblies are separated mutually and sealed, and thus, the electrolyte cannot flow among the plurality of accommodation spaces so as to reduce the fire risk caused by a short circuit among the plurality of electrode assemblies.

### BRIEF DESCRIPTION OF DRAWINGS

FIG. 1 is an entire structural schematic diagram of a battery pack according to one implementation mode of the present application.
FIG. 2 is a partial exploded view of a battery, after a second cap is removed, as shown in FIG. 1 in some embodiments.
FIG. 3 is a partial exploded view of the battery, after a circuit board is removed, as shown in FIG. 2.
FIG. 4 is a partial exploded view of one single electrode assembly in the battery shown in FIG. 3.
FIG. 5 is a schematic diagram of the battery, after a first cap covers, shown in FIG. 3.
FIG. 6 is a schematic diagram of the battery, after the first cap is removed, shown in FIG. 3.
FIG. 7 is a partial enlarged view of the battery shown in FIG. 2.
FIG. 8 is another partial enlarged view of the battery shown in FIG. 2.
FIG. 9 is a structural schematic diagram of the battery shown in FIG. 1 from another angle.
FIG. 10 is a partial exploded view of the battery, after the second cap is removed, as shown in FIG. 1 in some another embodiments.
FIG. 11 is a partial enlarged view of the battery shown in FIG. 10.
FIG. 12 is another partial enlarged view of the battery shown in FIG. 10.
FIG. 13 is a structural schematic diagram of an electrical apparatus according to one implementation mode of the present application.

### Reference Signs of Main Elements

electrical apparatus 1
housing 10
first surface 11
second surface 12
circuit board 20
conductive terminal 21
electrode assembly 30
electrode plate assembly 31
first electrode tab 32
second electrode tab 33
first cap 40
seal 41
second cap 50
conductive connection plate 60
first conductive portion 61
second conductive portion 62
second conductive connection plate 63
battery pack 100
accommodation space 111
opening 112
second slot 120
main body 1101
connection portion 1102
starting end A
tail end B
total negative output electrode N
total positive output electrode P

The present application will be further illustrated by the following specific implementation modes in combination with the drawings above.

### DETAILED DESCRIPTION OF EMBODIMENTS

The technical solution of the embodiments of the present application will be described in a clearly and fully understandable way in connection with the drawings in the embodiments of the present application. It is obvious that the described embodiments are just a part but not all of the embodiments of the present application.

Unless otherwise defined, all the technical terms and scientific terms here should be of general meaning as understood by those skilled in the art of the present application. Terms herein in the Specification of the present application are just to describe the specific implementation modes, but not intended to limit the present application.

Some implementation modes of the present application will be illustrated in details in combination with the drawings. In case of no conflict, the undermentioned implementation modes and features in the implementation modes can be combined with each other.

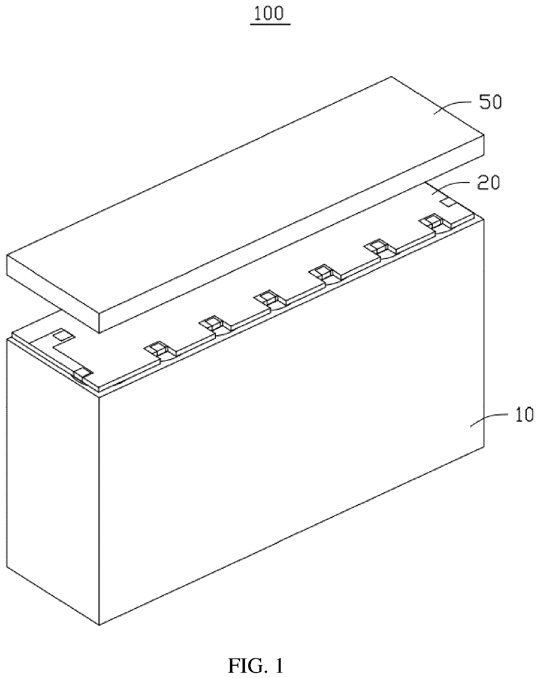

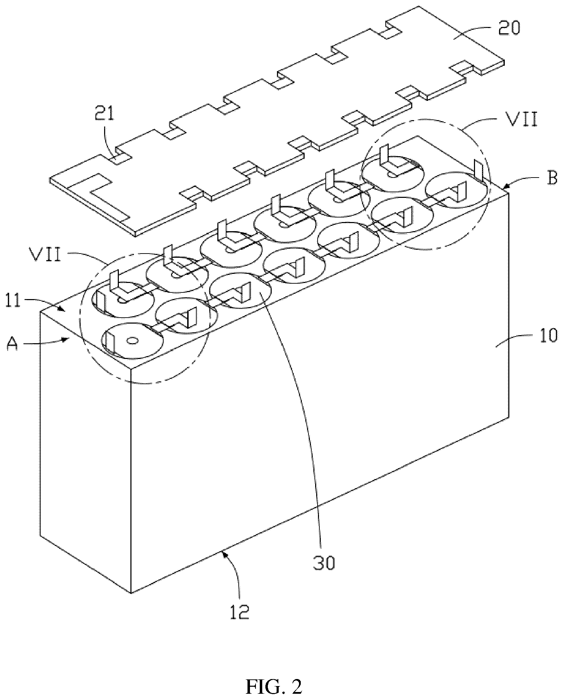

Referring to FIG. 1 and FIG. 2, one implementation mode of the present application provides a battery pack 100, including a housing 10, a circuit board 20, and a plurality of electrode assemblies 30. The housing 10 may be roughly of a cuboid structure and includes a first surface 11 and a second surface 12 opposite to each other. The circuit board 20 is arranged on the first surface 11. In some embodiments, the circuit board 20 can be fixed to the first surface 11 by a fastener (such as a screw or a bolt), so that the position of the circuit board 20 is fixed and the circuit board 20 is prevented from moving above the first surface 11.

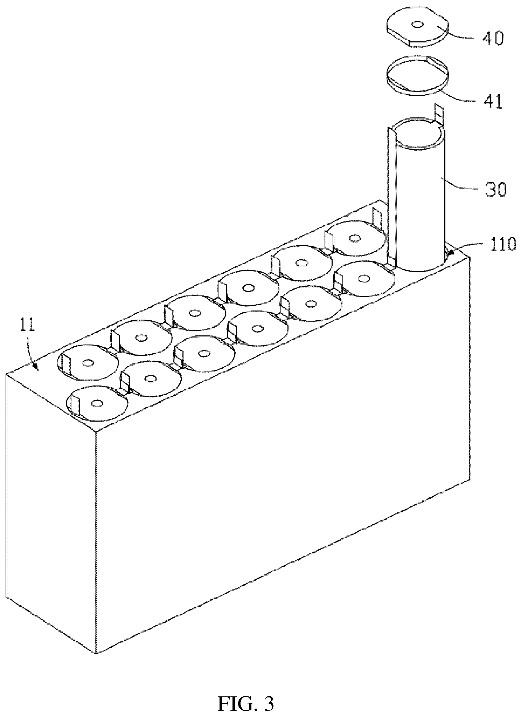

Referring to FIG. 3, the first surface 11 is provided with a plurality of first slots 110. The first slot 110 does not penetrate the second surface 12. The first slot 110 may be integrally formed by injection molding, or may be formed by excavating the first surface 11 of the housing 10. For example, the housing 10 is integrally formed by resin injection molding and is simple in structure, good in sealing performance, easy to control the shape of the first slot 110, and beneficial to automatic production, and efficiency is improved. A plurality of first slots 110 are formed at intervals. As shown in the drawing, a plurality of first slots 110 are distributed in the first surface 11 in two rows, spacings between the adjacent first slots 110 in each row are the same, and spacings between the adjacent first slots 110 in different rows are also the same. It can be understood that the arrangement mode and the number of the first slots 110 may also be changed, which is not limited in the present application.

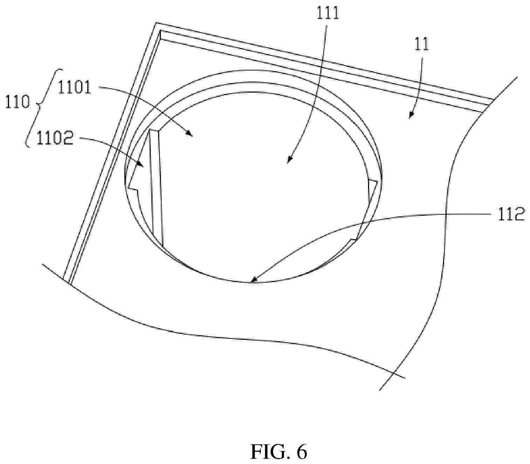

Referring to FIG. 3 and FIG. 5 together, the battery pack 100 further includes a plurality of first caps 40, and the plurality of first caps 40 respectively cover the plurality of first slots 110 to form a plurality of mutually separated accommodation spaces 111 (shown in FIG. 6), wherein the first cap 40 may be of a round structure, two openings are formed in the surface of the first cap, a first electrode tab 32 and a second electrode tab 33 can respectively pass through the two openings so as to extend out of the accommodation space 111, and the electrode tabs can be conveniently positioned so as to reduce shaking of the electrode assembly 30 in the accommodation space in the assembling process. In addition, the first cap 40 may also include a clipped corner structure, and the clipped corner edge of the first cap 40 and the inner wall of the first slot 110 form an opening so as to fix the electrode tab and enable the electrode tab to extend out. By forming the openings in the surface of the first cap 40 at the edges of both opposite sides or forming the clipped corners on both opposite sides of the first cap 40, so that the first electrode tab 32 and the second electrode tab 33 can extend out of the opposite edges of the first slot 110, thereby facilitating connection between the electrode tabs. In addition, in order to prevent a short circuit among different electrode assemblies 30, the housing 10 can be made of an insulation material.

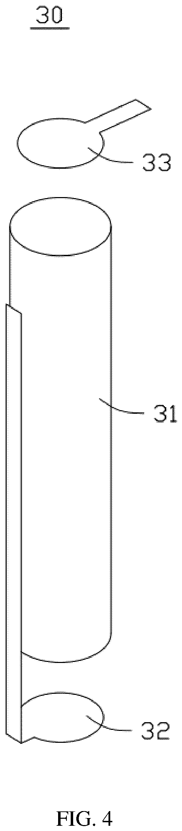

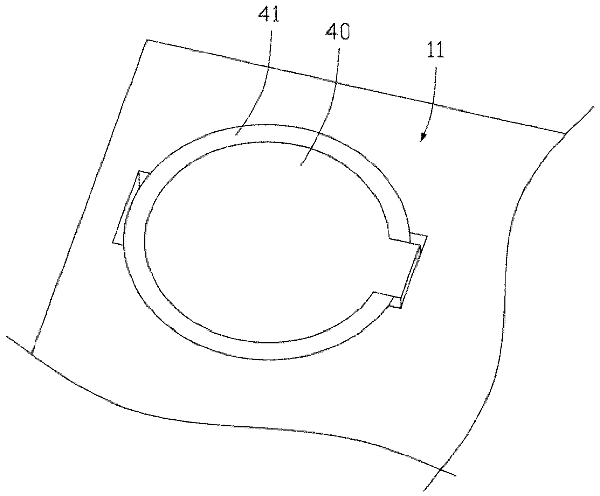

Referring to FIG. 3 and FIG. 4 together, the electrode assembly 30 each includes an electrode plate assembly 31, a first electrode tab 32, and a second electrode tab 33. The electrode plate assembly 31 includes a first electrode plate, a second electrode plate, and a separator arranged between the first electrode plate and the second electrode plate. The separator is used for preventing a short circuit caused by direct connection of the first electrode plate and the second electrode plate. The electrode plate assembly 31 may be obtained by sequentially laminating and winding the first electrode plate, the separator, and the second electrode plate, i.e., the electrode assembly 30 is a winding electrode assembly. The electrode plate assembly 31 is accommodated in the accommodation space 111, the first electrode tab 32 and the second electrode tab 33 are electrically connected to the electrode plate assembly 31, the first electrode tab 32 and the second electrode tab 33 further extend out of the accommodation space 111, and at least one first electrode tab 32 and at least one second electrode tab 33 in the plurality of electrode assemblies 30 are electrically connected to the circuit board 20. Therefore, the polarity of the electrode plate assemblies 31 can be conducted to the circuit board 20 through the first electrode tab 32 and the second electrode tab 33. Specifically, the first electrode plate includes a first current collector and a first active substance layer arranged on the first current collector. The second electrode plate includes a second current collector and a second active substance layer arranged on the second current collector. The first electrode tab 32 and the second electrode tab 33 are respectively electrically connected to the first current collector and the second current collector.

In some embodiments, the electrode plate assembly 31 is a cylindrical full electrode tab winding structure, i.e., the first current collector and the second current collector reserve blank foils at both opposite ends of the winding structure, after the electrode plate assembly 31 is formed by winding, the blank foils at both ends of the electrode plate assembly 31 are kneaded flat, and then current collection disks are respectively welded on the kneaded surfaces of the blank foils so as to form the first electrode tab 32 and the second electrode tab 33, wherein the first electrode tab 32 is a negative electrode tab and a material thereof is not limited to copper or nickel, and the second electrode tab 33 is a positive electrode tab and a material thereof may be, but not limited to, aluminium or nickel.

The battery pack 100 further includes electrolyte (not shown in the drawings). The electrolyte is disposed in the accommodation space 111 and sufficiently wet the first electrode plate, the second electrode plate, and the separator for implementing ionic conduction, wherein the electrolyte may be in direct contact with the inner wall of the housing 10, and in order to prevent electrolyte corrosion, the housing 10 and the first cap 40 may also be made of an insulation material resistant to electrolyte corrosion, for example, an organic polymer material such as Liquid Crystal Polymer (LCP), polyethylene terephthalate (PET), polyvinyl chloride (PVC) or polypropylene (PP), etc.

As shown in FIG. 1, in some embodiments, the battery pack 100 further includes a second cap 50, and the second cap 50 covers the housing 10. The circuit board 20 is positioned between the second cap 50 and the housing 10. Therefore, the second cap 50 can protect internal structures (such as the circuit board 20 and the like) of the battery pack 100.

Therefore, in the present application, the housing 10 not only is used as a shell of the entire battery pack 100, but also is used as a shell of the single electrode assembly, and the electrode plate assembly 31 and the electrolyte are arranged in the first slot 110 formed in the housing 10. Therefore, the present application reduces the segmented machining process of respectively encapsulating each electrode assembly 30 and then integrally carrying out encapsulation, facilitates simplifying the structure and the manufacturing process of the battery pack 100, and reduces the cost. Moreover, in the present application, the accommodation spaces 111 for accommodating different electrode assemblies 30 are separated mutually and sealed, and thus, the electrolyte cannot flow among the plurality of accommodation spaces 111 so as to reduce the fire risk caused by the short circuit among the plurality of electrode assemblies 30.

Referring to FIG. 4 and FIG. 6 together, in some embodiments, the first slot 110 includes a main body 1101 and two connection portions 1102 connected to the inner wall of the main body 1101. The main body 1101 and the electrode plate assembly 31 are matched in shape and are of a hollow cylinder shape; and the connection portion 1102 is a rectangular groove formed in the hollow cylindrical inner wall. The electrode plate assembly 31 is accommodated in the main body 1101. The first electrode tab 32 and the second electrode tab 33 are respectively accommodated in the two connection portions 1102, and extend out of the accommodation space 111 from the connection portions 1102 so as to be electrically connected to the circuit board 20. Therefore, arranging the connection portions 1102 is convenient to position the first electrode tab 32 and the second electrode tab 33 in the first slot 110.

As shown in FIG. 5 and FIG. 6, in some embodiments, the first slot 110 forms an opening 112 in the first surface 11, and the first cap 40 covers the opening 112 so as to form the accommodation space 111, wherein the first cap 40 may be fixed to the opening 112 by an ultrasonic welding mode. A seal 41 is arranged between the first cap 40 and the opening 112, and the seal 41 is used for sealing a gap between the first cap 40 and the opening 112, i.e., implementing sealing of the single accommodation space 111 and preventing the electrolyte from flowing out of the accommodation space 111. A material of the seal 41 may be a polyolefin adhesive.

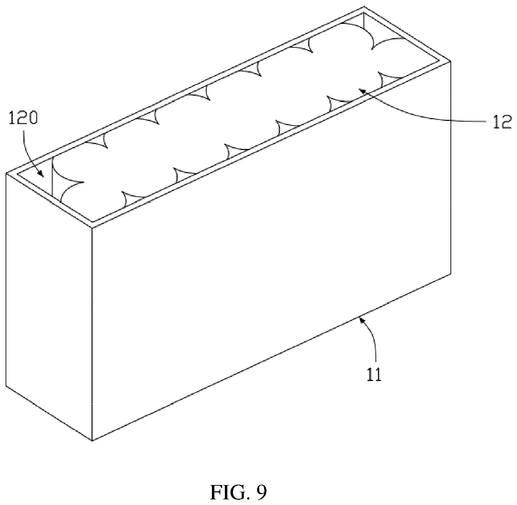

As shown in FIG. 9, in some embodiments, the second surface 12 is sunken towards the first surface 11 to form a plurality of second slots (120), and the second slot 120 does not penetrate the first surface 11. The second slot 120 is not communicated with the first slot 110, i.e., the second slot 120 and the first slot 110 do not have passages communicated with each other in the housing 10. A cooling medium is filled in the second slot 120, and the cooling medium is used for cooling the electrode assemblies 30 so as to fulfill the aim of cooling, wherein the cooling medium may be R22, R410a, R32, etc. In some embodiments, in order to have a better heat dissipation effect, a cooling element may also be arranged. The cooling element is provided with cylinders and a substrate, the cylinders are positioned on the surface of the substrate, a plurality of cylinders may be arranged at intervals, and the cooling mediums may be arranged in the cylinders, wherein the cylinder may be arranged in the second slot 120 so as to conduct heat through the cylinder and achieve a better heat dissipation effect, and meanwhile, has a positioning function when the battery pack is installed so as to facilitate installation and replacement.

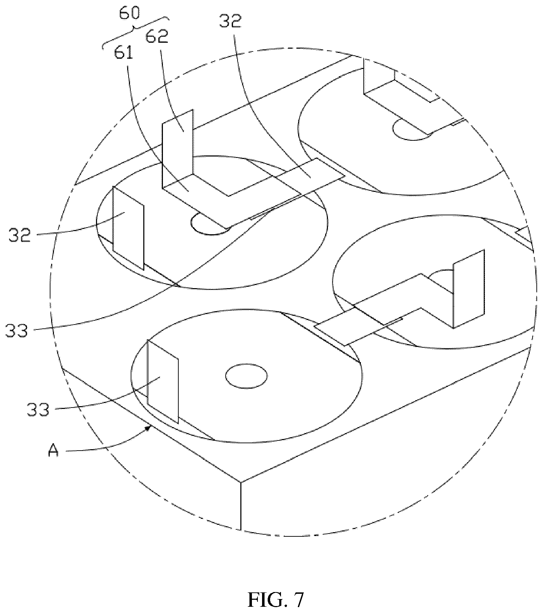

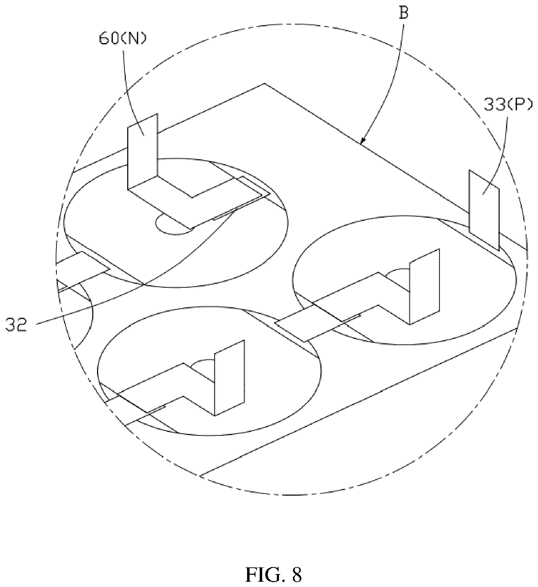

Referring to FIG. 2, FIG. 7, and FIG. 8 together, in some embodiments, a plurality of electrode assemblies 30 are connected in series with each other, i.e., the first electrode tab 32 of one electrode assembly 30 is electrically connected to the second electrode tab 33 of another electrode assembly 30 so as to form a series electrode assembly group, wherein electrical connection between the first electrode tab 32 of one electrode assembly 30 and the second electrode tab 33 of another electrode assembly 30 can be implemented by ultrasonic or laser welding. Specifically, as shown in the drawings, when the first slots 110 are distributed in the first surface 11 in two rows, the electrode assemblies 30 are also correspondingly distributed in two rows. It is defined that the housing 10 respectively has a starting end A and a tail end B along an arrangement direction of each row of electrode assemblies 30. In two adjacent electrode assemblies 30 in the same row, the first electrode tab 32 of one electrode assembly 30 is electrically connected to the second electrode tab 33 of the other electrode assembly 30, so that two electrode assemblies 30 are connected in series with each other. As shown in FIG. 7, in two electrode assemblies 30 close to the starting end A in two rows of electrode assemblies 30, the first electrode tab 32 of one electrode assembly 30 and the second electrode tab 33 of the other electrode assembly 30 are both connected to a conductive terminal 21 of the circuit board 20, so that two electrode assemblies 30 are also connected in series with each other, thereby implementing series connection between the electrode assemblies 30 in different rows. In addition, as shown in FIG. 8, the first electrode tab 32 of the electrode assembly 30 close to the tail end B in a first row is used as a total negative output electrode N after being connected with a first conductive connection plate 60, and the second electrode tab 33 of the electrode assembly 30 close to the tail end B in a second row is used as a total positive output electrode P, so that electric properties of all the electrode assemblies 30 are led out through the total positive output electrode P and the total negative output electrode N after being collected.

As shown in FIG. 7, in some embodiments, the first conductive connection plate 60 may also be electrically connected with the circuit board 20 as a series port of each electrode assembly 30, so that the circuit board 20 can be used for acquiring an electric signal (such as a voltage, a current, etc.) of each electrode assembly 30. The first conductive connection plate 60 includes a first conductive portion 61 and a second conductive portion 62 connected with each other, and the first conductive portion 61 and the second conductive portion 62 can be perpendicular to each other. The first conductive portion 61 is connected to the first electrode tab 32 and/or the second electrode tab 33 which are electrically connected with each other, and the second conductive portion 62 is electrically connected to the conductive terminal 21 arranged on the circuit board 20, wherein the first conductive portion 61 can be welded and fixed with the first electrode tab 32 and/or the second electrode tab 33 which are connected with each other, and the second conductive portion 62 can be welded and fixed with the conductive terminal 21 on the circuit board 20. The first conductive connection plate 60 may include a copper sheet. In addition, the first electrode tab 32 and/or the second electrode tab 33 and/or a partial region in the first conductive connection plate 60 can be positioned on the surface of the first cap 40, i.e., the first cap 40 can take a supporting effect on the first electrode tab 32, the second electrode tab 33, and the first conductive connection plate 60 so as to inhibit shaking of the connection position in the manufacturing and using process and reduce the risk of a connection failure.

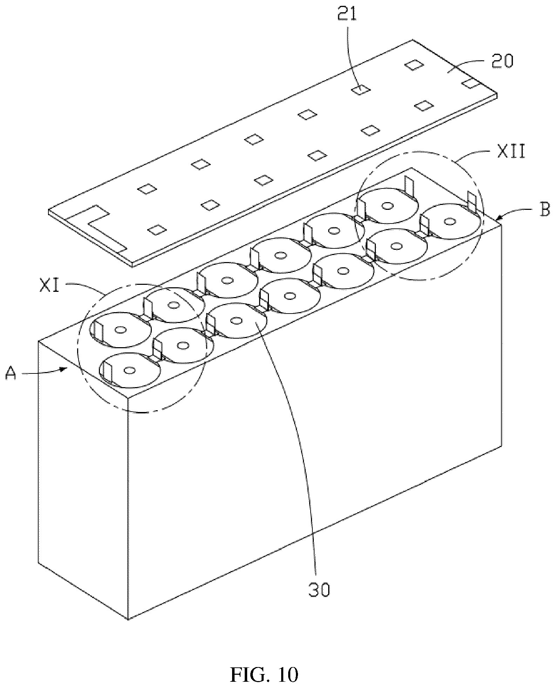

Referring to FIG. 10 to FIG. 12 together, in some other embodiments a specific connection mode among different electrode assemblies 30 may also be changed.

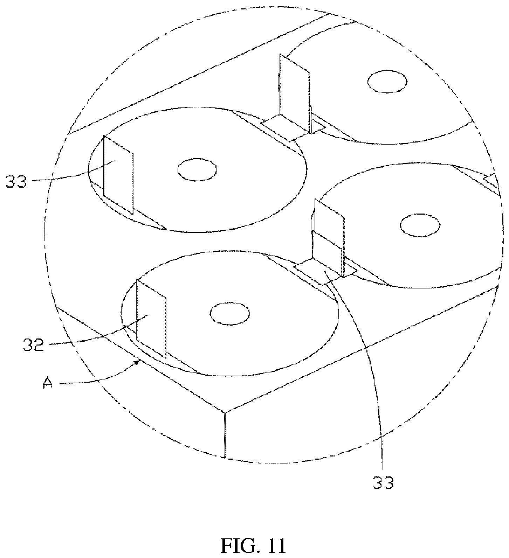

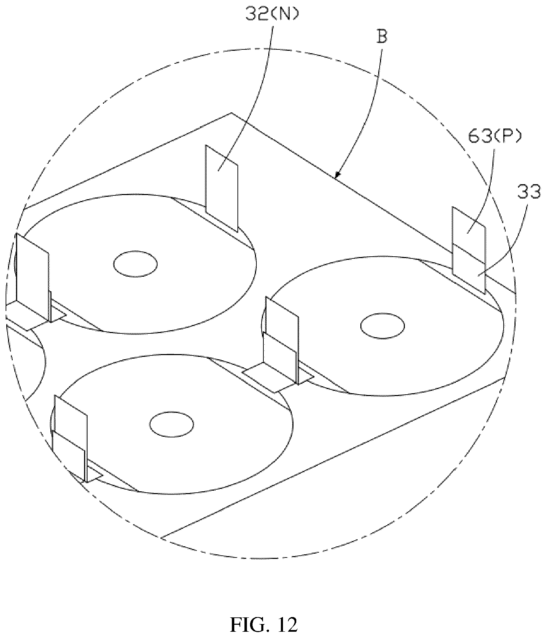

Wherein, a length by which the first electrode tab 32 extends out of the accommodation space 111 is greater than that by which the second electrode tab 33 extends out of the accommodation space 111. As the first electrode tab 32 is relatively long, the first electrode tab 32 may be set to be directly and electrically connected to the circuit board 20, and meanwhile, it is also convenient to directly connect the first electrode tab 32 with the second electrode tab 33 between the adjacent electrode assemblies 30, so that use of metal connectors is reduced, the manufacturing process is simplified, and the manufacturing cost is reduced. Specifically, as shown in FIG. 11, the first electrode tab 32 of the electrode assembly 30 close to the starting end A in the first row is electrically connected with the conductive terminal 21 on the circuit board 20, and the second electrode tab 33 of the electrode assembly 30 close to the starting end A in the second row is also electrically connected with the conductive terminal 21 on the circuit board 20 after being welded with a second conductive connection plate 63 (such as a copper sheet) so as to implement series connection between the electrode assemblies 30 in different rows. In addition, as shown in FIG. 12, the first electrode tab 32 of the electrode assembly 30 close to the tail end B in the first row is used as the total negative output electrode N, the second electrode tab 33 of the electrode assembly 30 close to the tail end B in the second row is welded with the second conductive connection plate 63 to be used as the total positive output electrode P, and all the second conductive connection plates 63 can be, as the series port of each electrode assembly 30, electrically connected with the circuit board 20.

In other embodiments, a plurality of electrode assemblies 30 may also be connected in parallel with each other, which is not limited herein. Namely, the first electrode tab 32 of one electrode assembly 30 is electrically connected to the first electrode tab 32 of another electrode assembly 30, and the second electrode tab 33 of one electrode assembly 30 is electrically connected to the second electrode tab 33 of another electrode assembly 30 so as to form a parallel electrode assembly group.

The electrode assembly 30 of the present application may be a lithium secondary battery, including a lithium metal secondary battery, a lithium ion secondary battery, a lithium polymer secondary battery, and a lithium ion polymer secondary battery. In other implementation modes, the electrode assembly 30 may also be any type of primary battery and secondary battery.

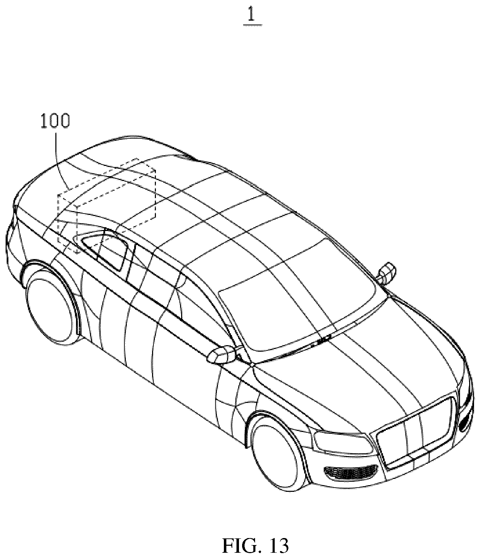

Referring to FIG. 13, the present application further provides an electrical apparatus 1. The electrical apparatus 1 includes the battery pack 100 as above. In one implementation mode, the electrical apparatus 1 of the present application may be, but not limited to, a vehicle, a motorcycle, an assist bicycle, a bicycle, etc.

The foregoing embodiments merely are exemplary embodiments of the present application, and not intended to limit the present application. Any modifications, equivalent replacements, and improvements made without departure from the spirit and principle of the present application shall fall within the protection scope of the present application.

## Claims

1. A battery pack, comprising a housing, a circuit board, and a plurality of electrode assemblies, **characterized in that**,
the housing comprises a first surface and a second surface opposite to each other, and the first surface is provided with a plurality of first slots;
the battery pack further comprises a plurality of first caps, and the plurality of first caps respectively cover the plurality of first slots to form a plurality of mutually separated accommodation spaces; and
the electrode assemblies each comprises an electrode plate assembly, a first electrode tab, and a second electrode tab, the electrode plate assembly is accommodated in the accommodation space, the first electrode tab and the second electrode tab extend out of the accommodation space, and at least one first electrode tab and at least one second electrode tab in the plurality of electrode assemblies are electrically connected to the circuit board.

2. The battery pack according to claim 1, **characterized in that**, the first slot comprises a main body and two connection portions, the electrode plate assembly is accommodated in the main body, and the first electrode tab and the second electrode tab are respectively accommodated in the two connection portions and extend out of the accommodation space from the connection portions.

3. The battery pack according to claim 1, **characterized in that**, the first slot forms an opening in the first surface, the first cap covers the opening, and a seal is arranged between the first cap and the opening.

4. The battery pack according to claim 1, **characterized in that**, the second surface is provided with a second slot, the second slot is not communicated with the first slot, and a cooling medium is accommodated in the second slot.

5. The battery pack according to claim 1, **characterized in that**, the battery pack further comprises a second cap, the second cap covers the housing, and the circuit board is positioned between the second cap and the housing.

6. The battery pack according to claim 1, **characterized in that**, the battery pack has at least one of the following characteristics:
(a) the first electrode tab of one said electrode assembly is electrically connected to the second electrode tab of another said electrode assembly so as to form a series electrode assembly group; and
(b) the first electrode tab of one said electrode assembly is electrically connected to the first electrode tab of another said electrode assembly, and the second electrode tab of one said electrode assembly is electrically connected to the second electrode tab of another said electrode assembly so as to form a parallel electrode assembly group.

7. The battery pack according to claim 6, **characterized in that**, the battery pack further comprises a conductive connection plate, the conductive connection plate comprises a first conductive portion and a second conductive portion, the first conductive portion is connected to the first electrode tab and/or the second electrode tab, the second conductive portion is electrically connected to the circuit board.

8. The battery pack according to claim 6, **characterized in that**, a length by which the first electrode tab extends out of the accommodation space is greater than that by which the second electrode tab extends out of the accommodation space, and at least one first electrode tab is connected with the circuit board by welding.

9. The battery pack according to claim 1, **characterized in that**, the circuit board is fixed to the first surface.

10. An electrical apparatus, **characterized in that**, the electrical apparatus comprises the battery pack according to any one of claims 1-9.
